# FASCICULE DE BREVET EUROPEEN

(11) **EP 2 891 947 B1**
(45) Date de publication et mention de la délivrance du brevet: **04.05.2022**
(21) Numéro de dépôt: 14198224.9
(22) Date de dépôt: 16.12.2014
(51) Int. Cl.: G06F 3/00, G06F 3/044, H04B 5/00, G06F 3/039

(54) **Dongle capacitif pour dispositifs de visualisation comportant une surface tactile capacitive**
Kapazitiver Dongle für Anzeigevorrichtungen, die eine kapazitive berührungsempfindliche Oberfläche haben
Capacitive dongle for display devices comprising a capacitive touch-sensitive surface

(30) Priorité: 20.12.2013 FR 1303028
(43) Date de publication de la demande: 08.07.2015
(73) Titulaire: THALES, 92400 Courbevoie (FR)
(72) Inventeur: Sontag, Yves, 33200 Bordeaux (FR); Coni, Philippe, 33127 Saint Jean D'Illac (FR); Abadie, Jean-Christophe, 33380 Biganos (FR)
(74) Mandataire: Marks & Clerk France

(56) Documents cités:
- WO-A1-2013/172829
- US-A1- 2008 238 879
- US-A1- 2010 315 384
- US-A1- 2013 225 072

## Description

Le domaine de l'invention est celui des dispositifs de visualisation comportant une surface tactile capacitive. Plus précisément, le domaine technique de l'invention est celui des dispositifs permettant d'échanger des informations avec ce type de dispositif de visualisation. Dans la suite du texte, ces moyens sont appelés « dongle ».

Classiquement, pour échanger des informations avec un dispositif de visualisation, il existe deux grandes techniques possibles. La première est de disposer une connexion électrique sur le dispositif sur laquelle on vient brancher le périphérique d'échange ou dongle. L'exemple le plus courant est la clé « USB », acronyme de « Universal Serial Bus ». La seconde technique est d'utiliser une liaison électrique sans fil. La plus connue est la liaison « Wi-Fi », acronyme de « Wireless Fidelity ».

Il existe cependant des applications où les dispositifs de visualisation sont parfaitement juxtaposés, sans pertes de surface utile. On citera notamment les planches de bord d'aéronef où la totalité de la surface est maintenant dédiée aux écrans de visualisation. Dans ce cas, il n'est pas facile de disposer simplement de connectique électrique. Il est toujours possible d'ajouter des connecteurs en face arrière des dispositifs de visualisation reliés à d'autres connecteurs disposés sous ou à côté des dispositifs de visualisation mais ces dispositions compliquent nécessairement l'agencement des visualisations et de la planche de bord. L'utilisation de liaisons sans fil nécessite également d'ajouter des ressources matérielles et d'autre part, ces liaisons peuvent être soumises à des interférences radioélectriques, peu compatibles d'une utilisation aéronautique.

Dans un grand nombre d'applications, les dispositifs de visualisation disposent de surface tactile. Une technique utilisée est la détection capacitive dite « projetée ». Cette technique consiste à réaliser une matrice de détection composée de lignes et de colonnes conductrices agencées de façon à détecter les variations locales de capacité introduites par la proximité des doigts de l'utilisateur ou de tout autre objet de désignation à condition qu'il soit électriquement conducteur. De l'art antérieur décrit dans les documents US 2013/225072 A1 , US 2008/238879 A1, et US 2010/315384 A1, sont connus des dispositifs de communication permettant à un dispositif portatif de communiquer avec un autre dispositif comportant une surface tactile, par moyen d'une connexion utilisant le capteur capacitif de la surface tactile. Ceci nécessite que le dispositif portatif soit maintenu en place durant la connexion, soit par l'utilisateur, soit en équilibre stable. Le document WO 2013/172829 A1 décrit le fonctionnement d'une surface tactile capacitive.

L'objet de l'invention est améliorer l'utilisation des moyens de détection des variations de capacité pour communiquer avec le dispositif de visualisation. En effet, par nature, tout signal provoquant une variation de capacité connue peut être identifié par la surface tactile à condition qu'elle dispose du logiciel nécessaire à sa reconnaissance. Ainsi, le dongle selon l'invention peut communiquer avec un dispositif de visualisation comportant une surface tactile capacitive simplement en le posant sur cette surface tactile sans apporter de modifications matérielles conséquentes. Plus précisément, l'invention a pour objet un dongle capacitif destiné à être utilisé avec un dispositif de visualisation comportant une surface tactile capacitive comprenant une matrice de lignes et de colonnes conductrices, le dongle étant disposé sur ladite surface tactile capacitive en utilisation fonctionnelle, le dongle fonctionnant en mode émission et en mode réception, comportant au moins :
- des moyens d'émission de signaux périodiques analogiques, lesdits signaux étant émis à au moins une fréquence spécifique dite fréquence « dongle » ;
- une pièce métallique conductrice plate en forme d'anneau reliée auxdits moyens d'émission, ladite pièce destinée à être posée sur ladite surface tactile capacitive ;
- des moyens de réception des signaux reçus issus de ladite pièce métallique conductrice ;
- des moyens d'analyse desdits signaux reçus numérisés ;
- des moyens de stockage des signaux émis et des signaux analysés ;
- une interface de communication numérique;
   - un dispositif à ventouse permettant de maintenir en place le dongle sur la surface tactile capacitive.

Avantageusement, les moyens de réception comportent :
- des moyens de détection dits « détection d'enveloppe » de signaux émis par la surface tactile dans une gamme d'amplitudes et de fréquences déterminées de façon à détecter la présence de ladite surface tactile capacitive, les dits moyens fonctionnant en mode passif, c'est-à-dire sans transmission de signaux par les moyens d'émission ;
- des moyens de démodulation synchrone fonctionnant à la fréquence ou aux fréquences « dongle » de façon à communiquer en réception avec ladite surface tactile.

Avantageusement, l'épaisseur de l'anneau est sensiblement égale à un pas de la matrice de la surface tactile capacitive.

L'invention concerne également un dispositif de visualisation comportant une surface tactile capacitive apte à échanger des données avec un dongle capacitif tel que défini ci-dessus et tel que la surface tactile comporte :
- une matrice de lignes et de colonnes conductrices ;
- des moyens de reconnaissance d'un profil déterminé correspondant aux variations de capacité induites sur les lignes et les colonnes de la matrice par la pièce métallique conductrice plate annulaire, lorsque le dongle est posé sur ladite surface tactile ;
- des moyens d'émission et de réception à la fréquence spécifique « dongle ».

Avantageusement, l'écran du dispositif de visualisation comporte un endroit spécifique marqué par un symbole particulier et réservé à l'emplacement du dongle.

L'invention concerne enfin un procédé de communication entre un dongle capacitif et un dispositif de visualisation tels que définis ci-dessus, caractérisé en ce que, lorsque le dongle est posé sur la surface tactile capacitive, ledit procédé comporte les étapes suivantes :
Etape 1 : Reconnaissance par les moyens de reconnaissance de la surface tactile du profil déterminé de la pièce métallique conductrice plate annulaire du dongle ;
Etape 2 : Reconnaissance par les moyens de détection dits « détection d'enveloppe » du dongle des signaux émis par la surface tactile en fonctionnement ;
Etape 3 : Préparation du mode de fonctionnement « dongle » de la surface tactile, les moyens d'émission passent en mode d'émission des fréquences « dongle » et les moyens de réception de la surface tactile passent en mode de réception des fréquences « dongle » ;
Etape 4 : Fonctionnement en mode « dongle », la surface tactile et le dongle échangent des signaux aux fréquences dongle.

Avantageusement, l'étape 4 est réalisé en mode « half duplex », le dongle et la surface tactile émettant et recevant alternativement sur les mêmes fréquences spécifiques « dongle ».

Avantageusement, l'étape 4 est réalisé en mode « full duplex », le dongle et la surface tactile émettant et recevant simultanément sur des fréquences spécifiques « dongle » différentes.

Avantageusement, pendant l'étape 4, les moyens d'émission et de réception de la surface tactile balaient uniquement les lignes et les colonnes conductrices de la matrice disposées sous la pièce métallique conductrice plate annulaire du dongle.

L'invention sera mieux comprise et d'autres avantages apparaîtront à la lecture de la description qui va suivre donnée à titre non limitatif et grâce aux figures annexées parmi lesquelles :
La figure 1 représente le synoptique général d'une dalle tactile matricielle ;
La figure 2 représente le synoptique d'un dongle ;
La figure 3 représente le couplage capacitif entre une dalle tactile et un dongle;
La figure 4 représente une vue de dessus de l'anneau de détection du dongle posé sur une dalle tactile ;
La figure 5 représente le profil capacitif du dongle perçue par la dalle tactile ;
La figure 6 représente une vue en coupe d'un dongle à ventouse selon l'invention.

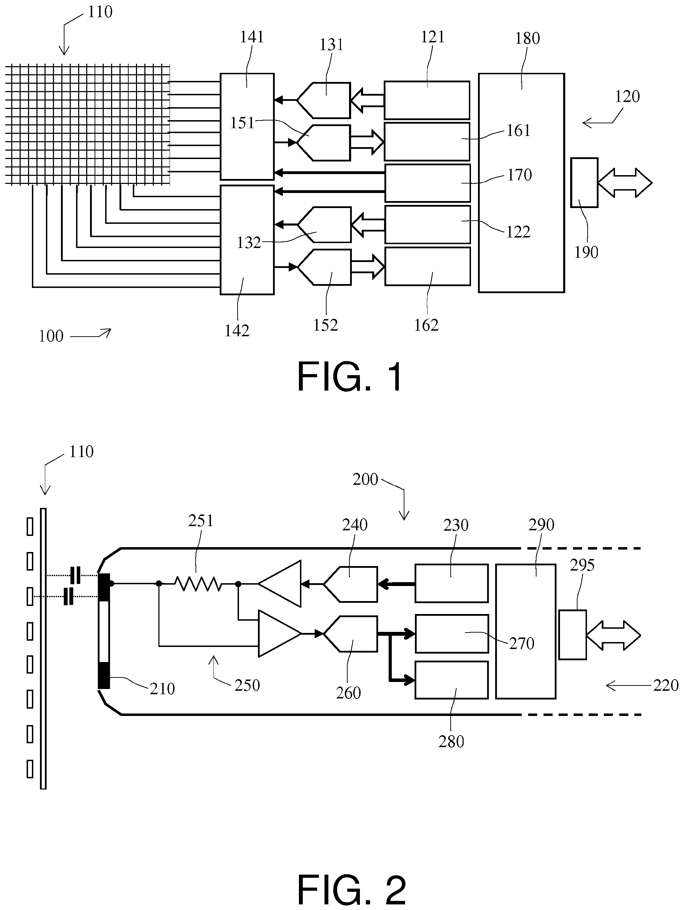

Le dongle selon l'invention est destiné à être utilisé avec des dalles tactiles capacitives. A titre d'exemple, la figure 1 représente le synoptique général d'une dalle tactile matricielle 100 et de son électronique associée. La matrice 110 est composée de lignes et de colonnes conductrices réalisées habituellement en « ITO », acronyme de « Indium Tin Oxyde ». Typiquement, une telle surface tactile peut posséder une cinquantaine de colonnes et une trentaine de lignes pour un écran de planche de bord avionique. A titre d'exemple, le pas entre deux lignes est de l'ordre de 7 millimètres environ.

La partie électronique 120 comporte essentiellement :
- des moyens d'émission 121 et 122 de signaux périodiques destinés à alimenter les lignes et les colonnes ;
- des convertisseurs « DAC » 131 et 132, signifiant « Digital-to-Analog Converter » disposés à la sortie des moyens d'émission ;
- des moyens de multiplexage 141 et 142 disposés en sortie des « DACs » adressant successivement les différentes lignes et les différentes colonnes de la matrice ;
- des convertisseurs « ADC » 151 et 152, signifiant « Analog -to- Digital Converter » disposés à la sortie des moyens de multiplexage ;
- des démodulations synchrones 161 et 162 disposées en sortie des « ADCs » ;
- une électronique d'adressage des lignes et des colonnes 170 ;
- des moyens de traitement numérique 180 des signaux issus des démodulations synchrones permettant de déterminer les variations de capacité induites au niveau des lignes et des colonnes de la matrice. Chaque démodulateur permet de délivrer l'amplitude et la phase du signal traité ;
- une interface d'entrées-sorties 190 ;

La réalisation de la partie électronique peut se faire sous différentes formes. Elle peut comprendre des composants traditionnels ou des composants « ASIC », acronyme de « Application-Specific Integrated Circuit » analogiques ou mixtes pour la partie analogique dite « front end » qui réalise les fonctions d'injection de tension, de mesure de courant, de multiplexage et de conversion analogique-numérique. Elle peut comprendre un composant de type « FPGA », acronyme signifiant « Field-Programmable Gate Array » pour le traitement numérique ou encore un microcontrôleur, intégré ou pas dans le FPGA.

Plus le nombre de convertisseurs « ADC » est élevé, plus la rapidité de détection d'appui est élevée et plus le temps de latence est faible. Le synoptique représenté en figure 1 comporte un ADC 131 et un DAC 151 dédiés aux lignes et un ADC 132 et un DAC 152 dédiés aux colonnes.

A titre d'exemple, on peut utiliser deux fréquences différentes pour la détection d'appui en ligne et deux autres fréquences différentes pour la détection d'appui en colonne. Afin que les différentes fréquences n'interfèrent pas entre elles, celles-ci sont choisies « orthogonales », ce qui signifie que le temps d'intégration est identique pour les différentes démodulations synchrones, ce temps d'intégration étant un multiple exact de chacune des périodes. Cette disposition permet de balayer simultanément les lignes et les colonnes sans qu'il y ait d'interférence entre les signaux.

La détection d'appui peut se faire en mode dit « self-capacitance » et/ou en mode « mutual capacitance ». Le premier mode consiste à lire les lignes et les colonnes du réseau de touches de la matrice. Le second mode consiste à lire chaque intersection du réseau de lignes et de colonnes de la matrice. Le premier mode permet de scruter rapidement la surface tactile et de repérer les coordonnées possibles des appuis. Le second mode permet de départager les appuis réels des appuis « fantômes ».

La surface tactile comporte de plus :
- des moyens de reconnaissance d'un profil déterminé correspondant aux variations de capacité induites sur les lignes et les colonnes de la matrice par la pièce métallique conductrice plate annulaire du dongle, lorsque le dongle est posé sur ladite surface tactile ;
- des moyens d'émission et de réception à une ou des fréquences spécifiques « dongle ».

Le dongle capacitif est destiné à être utilisé avec un dispositif de visualisation comportant une surface tactile capacitive telle que décrite ci-dessus. La fonction du dongle est d'émettre et de recevoir des données numériques en utilisant les propriétés d'émission et de réception de signaux de la dalle tactile. Le dongle est disposé sur la surface tactile capacitive en utilisation fonctionnelle.

De façon générale, le dongle capacitif comporte :
- des moyens d'émission de signaux périodiques analogiques, lesdits signaux étant émis à au moins une fréquence spécifique dite fréquence « dongle » compatible des fréquences de la dalle tactile ;
- une pièce métallique conductrice plate en forme d'anneau reliée auxdits moyens d'émission, ladite pièce destinée à être posée sur ladite surface tactile capacitive et assurant la transmission et la réception des données ;
- des moyens de réception des signaux reçus issus de ladite pièce métallique conductrice ;
- des moyens d'analyse desdits signaux reçus numérisés ;
- des moyens de stockage des signaux émis et des signaux analysés ;
- une interface de communication numérique.

A titre d'exemple, un dongle capacitif 200 est représenté sur la figure 2. Il comporte une rondelle capacitive 210 et un ensemble électronique intégré 220.

L'ensemble électronique comporte des moyens voisins de ceux de la dalle tactile. Ce sont :
- un générateur de tensions 230 ;
- un convertisseur DAC 240 ;
- un sous-ensemble analogique 250 d'émission-réception capable de générer et de recevoir des tensions sinusoïdales sur la rondelle conductrice 210. Dans le schéma de la figure 2, en mode de réception, le courant capacitif issu du générateur de la surface tactile est mesuré par une résistance 251 dont l'ordre de grandeur est typiquement de 1 KΩ ;
- un convertisseur ADC 260 ;
- des circuits de démodulations synchrones 270 ;
- un détecteur d'enveloppe 280 permettant de détecter la présence de signaux électriques issus d'une dalle tactile, indépendamment de leurs fréquences ;
- des moyens de traitement numérique 290 des signaux issus des démodulations synchrones permettant de déterminer les variations de capacité induites au niveau des lignes et des colonnes de la matrice. Chaque démodulateur permet de délivrer l'amplitude et la phase du signal traité ;
- une interface d'entrées-sorties 295 ;

Le potentiel électrique de référence des circuits analogiques 250 ou « masse » est relié à une partie conductrice extérieure en contact avec la main de l'opérateur pour obtenir l'indispensable retour de mode commun par la « terre ». L'alimentation électrique du dongle peut se faire par une pile ou un accumulateur, ou encore par un cordon de raccordement si celui-ci est connecté à un ordinateur portable ou à une tablette électronique. Cette alimentation n'est pas représentée sur la figure 2.

Le dongle peut être autonome pour l'échange de données avec l'écran à surface tactile ou être utilisé comme une simple interface en étant relié soit par un câble, soit encore par une liaison sans fil de type « Bluetooth^{®} », marque du groupement « Bluetooth Spécial Interest Group » reliant le dongle à une tablette ou à un ordinateur portable.

Le dongle peut disposer de différentes touches ou boutons pour effectuer diverses opérations comme la mise sous tension.

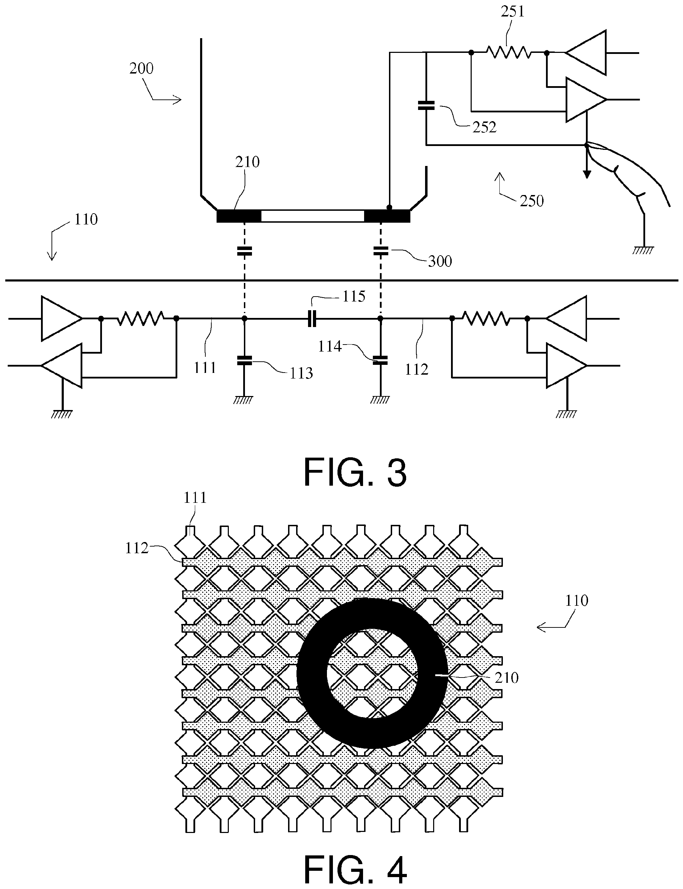

La figure 3 représente les différentes capacités existant au niveau des surfaces en contact entre le dongle et les lignes et les colonnes de la surface tactile. Chaque ligne 111 a une capacité 113, chaque colonne 112 a une capacité 114. Chaque croisement de ligne et de colonne a une capacité mutuelle 115. Le couplage entre le dongle et la surface tactile a une capacité 300. La conception mécanique du dongle prend en compte la présence de masse métallique près de la rondelle conductrice de telle sorte que l'ensemble des variations de capacitance vu par la surface tactile ne soit pas trop perturbé par des parties conductrices proches de la rondelle. L'inductance de connexion entre cette rondelle et l'électronique du dongle en contact avec la main de l'opérateur ne doit pas être trop élevée. La valeur de la capacitance équivalente 252 du dongle peut être relativement élevée, c'est-à-dire du même ordre de la capacité totale de ligne 112 ou de la capacité de colonne 113.

Quand le dongle est appliqué sur l'écran de visualisation, l'électronique de la surface tactile détecte une variation de capacitance sur les lignes et les colonnes situées sous l'anneau métallique du dongle. L'ensemble de ces variations est représentatif de la forme géométrique de la surface conductrice du dongle. Cette forme doit être choisie de telle sorte que l'ensemble des variations de capacitance soit remarquable et facile à distinguer par rapport aux appuis des doigts de l'opérateur lors de l'utilisation normale de la surface tactile. Pour faciliter la reconnaissance, il est préférable que le dongle capacitif puisse être posé à un endroit quelconque l'écran et sans orientation particulière. Aussi, la pièce de contact du dongle est de forme annulaire, rendant ainsi l'orientation du dongle sans importance.

La figure 4 représente une partie de lignes 112 en pointillés et de colonnes 111 en blanc de la surface tactile 110. Les lignes et les colonnes de la dalle tactile de la figure 4 ont une structure dite « diamant ». La surface conductrice 210 du dongle en forme d'anneau est représentée en noir sur cette figure 4. La différence entre les deux rayons de l'anneau doit être sensiblement égale à un pas de la matrice de la dalle tactile. On entend par pas la distance séparant deux lignes ou deux colonnes consécutives. Le diamètre extérieur doit être suffisamment important pour que l'effet capacitif se différencie d'une tache quelconque tout en restant raisonnable de façon que l'anneau reste de dimensions acceptables. Un bon compromis est que l'anneau intérieur est un rayon égal à environ deux pas et que l'anneau extérieur est un rayon égal à 3 pas, soit pour un pas de 7 millimètres, un rayon extérieur de l'anneau du dongle d'environ 20 millimètres.

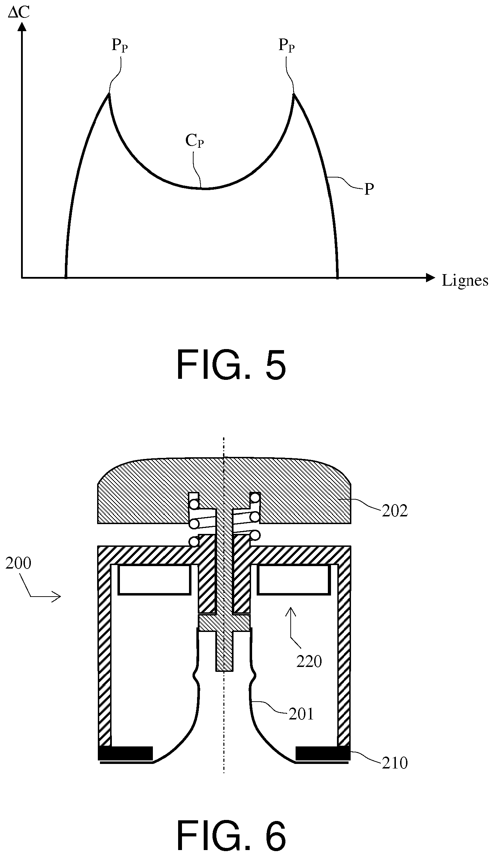

Les variations de capacité ΔC détectées sur les lignes de la surface tactile entraînées par la pose du dongle sont représentées de façon théorique en figure 5. On obtient un profil P comportant deux pics P_{P} espacés du diamètre intérieur de l'anneau entourant un creux central C_{P}. Ce profil est identique sur les colonnes de la matrice. Bien entendu, ce profil varie légèrement en fonction de la position effective du dongle sur la surface tactile.

Pour la transmission de fichiers de taille importante soit en émission, soit en réception, la durée de transmission peut être relativement longue. Or, l'écran de visualisation est généralement vertical ou proche de la verticale. Selon l'invention, e dongle est muni d'une ventouse qui permet de fixer le dongle sur la dalle tactile. Ainsi, l'utilisateur n'a pas à maintenir le dongle pendant la durée de la transmission. Cette solution est illustrée en figure 6 qui représente une vue en coupe du dongle 200. Celui-ci comporte une ventouse 201 actionnée par un piston à ressort 202. En outre, cette ventouse maintenant le dongle dans la même position, il n'est plus nécessaire de détecter et de suivre en permanence la position du dongle. Dans ce cas, l'information d'amplitude peut être utilisée pour la transmission, ce qui augmente le nombre de bits transmis par symbole et améliore le débit de transmission.

Le procédé de communication entre un dongle capacitif et un dispositif de visualisation comprenant une surface tactile comporte les étapes suivantes :
Etape 1 : Reconnaissance par les moyens de reconnaissance de la surface tactile du profil déterminé de la pièce métallique conductrice plate annulaire du dongle ;
Etape 2 : Reconnaissance par les moyens de détection dits « détection d'enveloppe » du dongle des signaux émis par la surface tactile en fonctionnement ;
Etape 3 : Préparation du mode de fonctionnement « dongle » de la surface tactile, les moyens d'émission passent en mode d'émission des fréquences « dongle » et les moyens de réception de la surface tactile passent en mode de réception des fréquences « dongle » ;
Etape 4 : Fonctionnement en mode « dongle », la surface tactile et le dongle échangent des signaux aux fréquences dongle.

Dans l'étape 1, la surface tactile est dans un mode opérationnel normal de détection d'appui. La reconnaissance du dongle capacitif se fait uniquement par la reconnaissance de la forme de l'anneau capacitif du dongle. Pendant cette phase, le dongle est dans une position d'attente, initialisée à sa mise sous tension. Il ne génère aucun signal et ses démodulations synchrones ne sont pas actives. Sa fonction de détection d'enveloppe reste cependant en veille, elle permet de détecter le contact avec la surface tactile par la détection de l'amplitude de signaux dans la gamme de fréquences concernée, ce que les démodulations synchrones ne peuvent faire faute de connaitre l'exacte valeur des fréquences en question.

En effet, les différents écrans d'une même planche de bord travaillent avec des fréquences différentes afin que les surfaces tactiles n'interfèrent pas entre elles. Le dongle ignore donc a priori les fréquences utilisées par la dalle tactile sur laquelle il repose.

La surface tactile détecte le profil de variation de self-capacitance en ligne et en colonne. Ce profil est du type de celui de la figure 5. La détection peut se faire simplement par la détection des deux maxima du profil, leur distance relative étant connue ou le ratio de l'amplitude maximale des pics sur celle du creux central. On peut utiliser des moyens de reconnaissance plus sophistiqués. Quand cette première étape est terminée, les coordonnées de position du dongle sont connues. Dans une variante, le système peut afficher un symbole spécifique représentant l'empreinte du dongle et inviter l'operateur à le placer dessus. Ainsi, la position du dongle est parfaitement connue.

Parallèlement, dans une seconde étape, le détecteur d'enveloppe du dongle détecte la présence de signaux d'amplitude acceptable dans la gamme de fréquences convenable permettant de détecter la présence d'une dalle tactile active. Le dongle active ses démodulateurs synchrones et est en attente de recevoir un message de la dalle tactile.

Dans une troisième étape, la surface tactile passe dans un mode de fonctionnement « dongle ». La surface tactile configure les fréquences de porteuses de ses générateurs sur des fréquences spécifiques « dongle », connues de celui-ci et des écrans de visualisation. Il est préférable de choisir des fréquences « dongle » qui ne sont pas utilisées pour la détection d'appui. Dans l'exemple de la figure 1, la surface tactile fonctionne avec quatre générateurs de fréquences, quatre fréquences particulières sont dédiées au dongle afin d'optimiser l'emploi des ressources matérielles disponibles. Ces fréquences sont connues du dongle par construction.

La dalle émet alors un premier message de reconnaissance vers le dongle. Le dongle qui était dans un mode d'attente et avait détecté le contact potentiel avec une surface tactile va détecter le message émis par la surface tactile et après la fin du message attendre l'expiration d'un certain délai.

Dans une quatrième étape, la transmission des données est effectuée. Le dongle a bien reçu le message d'initialisation émis par la surface tactile et a attendu le délai écoulé après la fin de celui-ci.

Le dongle se positionne alors dans un mode « maître » pour la transmission en « half duplex ». Dans ce mode, le dongle et la surface tactile émettent et reçoivent alternativement sur les mêmes fréquences spécifiques « dongle ». A l'expiration du délai, la surface tactile s'est également positionnée dans un mode « esclave » en attente d'une communication dirigée par le dongle.

Le mode « half duplex » est privilégié dans la mesure où il est le mieux approprié pour les besoins de transmission considérés et qu'il exploite au mieux les ressources matérielles disponibles. Mais un mode de communication dit « full duplex »est tout à fait réalisable. Dans ce mode, le dongle et la surface tactile émettent et reçoivent simultanément sur des fréquences spécifiques « dongle » différentes. Dans ce cas, une ou des fréquences peuvent être allouées à un sens de communication, le reste pour l'autre sens. La dalle tactile étant composée de lignes et de colonnes, on peut également dédier les lignes et les moyens d'émission correspondants à l'émission et les colonnes et les moyens de réception correspondants à la réception.

Bien entendu, si le "dongle" n'a pas reçu le message et répondu dans un délai imparti, la surface tactile relance périodiquement un nouveau message d'initialisation tant que la présence d'un "dongle" est toujours détectée sans ambiguïté.

Positionné en mode « maître », le dongle envoie à la surface tactile un message de bonne acquisition lui signifiant que la communication est établie et qu'il gère celle-ci.

A titre d'exemple, le protocole de communication est similaire à celui d'une classique transmission « half duplex », comme les protocoles habituellement transmis sur support RS-232 ou RS-485.

Pendant cette phase en mode « dongle », pour la communication « half duplex », l'électronique de la surface tactile balaye en permanence une zone correspondant à la surface couverte par le dongle. Quand la surface tactile émet, elle mesure la capacitance lue sur les lignes et les colonnes ainsi couvertes. Quand le dongle émet, elle agit de façon similaire en mesurant le signal reçu.

L'évolution du profil de capacitance et de signal reçu permet de détecter une éventuelle variation de la coordonnée courante du dongle. Ainsi la présence du "dongle" est confirmée en permanence, et son exacte coordonnée rafraichie de façon permanente. Cela permet de suivre en permanence les variations de position du dongle, ce qui offre à l'opérateur une bonne souplesse d'utilisation, celui-ci pouvant se permettre de bouger un peu. Comme on ne balaye que la surface minimum correspondant au dongle, on optimise le temps alloué à la communication de données.

En effet, pour une réalisation matérielle simplifiée, on peut se contenter de balayer systématiquement toute la surface tactile. Mais, lors de la mesure de lignes ou de colonnes éloignées du dongle, le signal transmis pourrait se révéler trop faible pour établir une communication correcte. Pendant ces instants, les données ne seraient pas transmises, le débit utile moyen serait alors diminué.

La transmission des données s'effectue sur plusieurs ondes sinusoïdales porteuses. Il est préférable que la fréquence de ces porteuses reste dans la fourchette basse des fréquences utilisées normalement pour la détection d'appui à cause de l'affaiblissement causé par la résistance linéique des lignes et des colonnes conductrices de la surface tactile. La fréquence maximale possible dépend des caractéristiques de la surface tactile et de ses dimensions. Typiquement, cette fréquence maximale vaut quelques centaines de kilohertz.

La durée d'un symbole transmis est légèrement supérieure au temps d'intégration de la détection synchrone, dont l'inverse correspond à l'espacement des fréquences orthogonales. Pour une durée de 50 µs, le débit obtenu par symbole est de 20 KHz.

Le débit crête de transmission correspond au produit du débit par symbole, multiplié par le nombre de bits par symbole, multiplié par le nombre de porteuses.

Une transmission de type « OFDM », acronyme de « Orthogonal Frequency Division Multiplexing » permet un débit relativement élevé, grâce au grand nombre de porteuses utilisées et au grand nombre de bits codés par symbole.

Dans le cas où le système dispose des moyens de générer et de démoduler quatre fréquences porteuses, une modulation de type « QPSK », acronyme signifiant « QuadriPhase Shift Key » ou « DQPSK », acronyme de « Differential QuadriPhase Shift Key » procure deux bits par symbole. Le débit crête vaut alors 160 Kbaud, débit suffisant pour une transmission correspondant aux normes RS-232 ou ARINC-429. Pour doubler le débit, on peut aussi envisager d'utiliser deux fois plus de valeurs de phases que la modulation QPSK.

Une modulation uniquement de phase présente les avantages de la simplicité de codage pour la transmission et de réserver l'information d'amplitude pour le suivi de bougé du dongle sur l'écran.

Dans le cas où le dongle est placé à un endroit déterminé sur l'écran, le codage des symboles peut utiliser l'amplitude. De préférence, on choisit un emplacement d'écran ou l'atténuation du signal due à la nature résistive des lignes et des colonnes est la moindre.

## Revendications

1. Dispositif de communication dit dongle capacitif (200) destiné à être utilisé avec un dispositif de visualisation comportant une surface tactile capacitive (100) comprenant une matrice (110) de lignes et de colonnes conductrices, le dispositif de communication étant disposé sur ladite surface tactile capacitive en utilisation fonctionnelle, le dispositif de communication fonctionnant en mode émission et en mode réception, ledit dispositif de communication comportant au moins :
- des moyens d'émission (230, 240, 250) de signaux périodiques analogiques, lesdits signaux étant émis à au moins une fréquence spécifique dite fréquence « dongle » ;
- une pièce métallique (210) conductrice plate en forme d'anneau reliée auxdits moyens d'émission, ladite pièce destinée à être posée sur ladite surface tactile capacitive ;
- des moyens de réception (260, 270) des signaux reçus issus de ladite pièce métallique conductrice ;
- des moyens d'analyse (280, 290) desdits signaux reçus numérisés ;
- des moyens de stockage des signaux émis et des signaux analysés ;
- une interface (295) de communication numérique ;
**caractérisé en ce que** le dispositif de communication (200) comporte un dispositif à ventouse (201, 202) permettant de maintenir en place le dispositif de communication sur la surface tactile capacitive.

2. Dispositif de communication dit dongle capacitif selon la revendication 1, **caractérisé en ce que** les moyens de réception comportent :
- des moyens de détection (280) dits « détection d'enveloppe » de signaux émis par la surface tactile dans une gamme d'amplitudes et de fréquences déterminées de façon à détecter la présence de ladite surface tactile capacitive, les dits moyens fonctionnant en mode passif, c'est-à-dire sans transmission de signaux par les moyens d'émission ;
- des moyens de démodulation synchrone (270) fonctionnant à la fréquence ou aux fréquences « dongle » de façon à communiquer en réception avec ladite surface tactile.

3. Système de visualisation comprenant un dispositif de communication selon l'une des revendications 1 à 2 et un dispositif de visualisation comportant une surface tactile (100) capacitive apte à échanger des données avec ledit dispositif de communication , la dite surface tactile comportant une matrice (110) de lignes (111) et de colonnes (112) conductrices, **caractérisé en ce que** la surface tactile capacitive comporte :
- des moyens de reconnaissance d'un profil déterminé correspondant aux variations de capacité induites sur les lignes et les colonnes de la matrice par la pièce métallique conductrice plate annulaire, lorsque le dispositif de communication est posé sur ladite surface tactile ;
- des moyens d'émission et de réception à la fréquence spécifique « dongle ».

4. Procédé de communication d'un système selon la revendication 3, entre ledit dispositif de communication et ledit dispositif de visualisation, **caractérisé en ce que**, lorsque le dispositif de communication est posé sur la surface tactile capacitive, ledit procédé comporte les étapes suivantes :
Etape 1 : Reconnaissance par les moyens de reconnaissance de la surface tactile du profil déterminé de la pièce métallique conductrice plate annulaire du dongle ;
Etape 2 : Reconnaissance par les moyens de détection dits « détection d'enveloppe » du dispositif de communication des signaux émis par la surface tactile en fonctionnement ;
Etape 3 : Préparation du mode de fonctionnement « dongle » de la surface tactile, les moyens d'émission passent en mode d'émission des fréquences « dongle » et les moyens de réception de la surface tactile passent en mode de réception des fréquences « dongle » ;
Etape 4 : Fonctionnement en mode « dongle », la surface tactile et le dongle échangent des signaux aux fréquences dongle.

5. Procédé de communication selon la revendication 4, **caractérisé en ce que** l'étape 4 est réalisé en mode « half duplex », le dispositif de communication et la surface tactile émettant et recevant alternativement sur les mêmes fréquences spécifiques « dongle ».

6. Procédé de communication selon la revendication 4, **caractérisé en ce que** l'étape 4 est réalisé en mode « full duplex », le dispositif de communication et la surface tactile émettant et recevant simultanément sur des fréquences spécifiques « dongle » différentes.

7. Procédé de communication selon l'une des revendications 4 à 6, **caractérisé en ce que**, pendant l'étape 4, les moyens d'émission et de réception de la surface tactile balaient uniquement les lignes et les colonnes conductrices de la matrice disposées sous la pièce métallique conductrice plate annulaire du dispositif de communication.

## Patentansprüche

1. Kommunikationsvorrichtung, genannt kapazitiver Dongle (200), welche dazu bestimmt ist, mit einer Anzeigevorrichtung verwendet zu werden, welche eine kapazitive, berührungsempfindliche Oberfläche (100) aufweist, welche eine Matrix (110) von leitfähigen Zeilen und Spalten umfasst, wobei die Kommunikationsvorrichtung im Funktionsbetrieb auf der kapazitiven, berührungsempfindlichen Oberfläche angeordnet ist, wobei die Kommunikationsvorrichtung im Sende- und im Empfangsmodus arbeitet, wobei die Kommunikationsvorrichtung mindestens Folgendes aufweist:
- Mittel zum Senden (230, 240, 250) periodischer Analogsignale, wobei die Signale bei mindestens einer spezifischen Frequenz, genannt "Dongle-"Frequenz, gesendet werden;
- ein flaches, leitfähiges Metallteil (210) in Form eines Rings, welches mit den Sendemitteln verbunden ist, wobei das Teil dazu bestimmt ist, auf die kapazitive berührungsempfindliche Oberfläche gelegt zu werden;
- Mittel zum Empfangen (260, 270) der empfangenen Signale, welche aus dem leitfähigen Metallteil stammen;
- Mittel zur Analyse (280, 290) der empfangenen digitalisierten Signale;
- Mittel zur Speicherung der gesendeten Signale und der analysierten Signale;
- eine Schnittstelle (295) zur digitalen Kommunikation;
**dadurch gekennzeichnet, dass** die Kommunikationsvorrichtung (200) eine Vorrichtung mit Saugnapf (201, 202) aufweist, welche es ermöglicht, die Kommunikationsvorrichtung auf der kapazitiven, berührungsempfindlichen Oberfläche in Position zu halten.

2. Kommunikationsvorrichtung, genannt kapazitiver Dongle nach Anspruch 1, **dadurch gekennzeichnet, dass** die Empfangsmittel Folgendes aufweisen:
- Detektionsmittel (280), genannt "Hüllendetektion" von durch die berührungsempfindliche Oberfläche gesendeten Signalen in einem Bereich von derart bestimmten Amplituden und Frequenzen, dass das Vorhandensein der kapazitiven, berührungsempfindlichen Oberfläche detektiert wird, wobei die Mittel im passiven Modus arbeiten, das heißt, ohne Übertragung von Signalen durch die Sendemittel;
- Synchron-Demodulationsmittel (270), welche in der bzw. den "Dongle-"Frequenz(en) dergestalt arbeiten, dass sie im Empfang mit der berührungsempfindlichen Oberfläche kommunizieren.

3. Anzeigesystem, umfassend eine Kommunikationsvorrichtung nach einem der Ansprüche 1 bis 2 und eine Anzeigevorrichtung, welche eine kapazitive, berührungsempfindliche Oberfläche (100) aufweist, welche in der Lage ist, Daten mit der Kommunikationsvorrichtung auszutauschen, wobei die berührungsempfindliche Oberfläche eine Matrix (110) aus leitfähigen Zeilen (111) und Spalten (112) umfasst, **dadurch gekennzeichnet, dass** die kapazitive, berührungsempfindliche Oberfläche Folgendes aufweist:
- Mittel zur Erkennung eines bestimmten Profils, welches den Kapazitätsvariationen entspricht, welche auf den Zeilen und Spalten der Matrix durch das ringförmige, flache, leitfähige Metallteil induziert werden, wenn die Kommunikationsvorrichtung auf die berührungsempfindliche Oberfläche gelegt wird;
- Mittel zum Senden und Empfangen bei der spezifischen "Dongle-"Frequenz.

4. Kommunikationsverfahren eines Systems nach Anspruch 3, zwischen der Kommunikationsvorrichtung und der Anzeigevorrichtung, **dadurch gekennzeichnet, dass**, wenn die Kommunikationsvorrichtung auf die kapazitive, berührungsempfindliche Oberfläche gelegt wird, das Verfahren folgende Schritte aufweist:
Schritt 1: Erkennung, durch die Erkennungsmittel der berührungsempfindlichen Oberfläche, des bestimmten Profils des ringförmigen, flachen, leitfähigen Metallteils des Dongles;
Schritt 2: Erkennung, durch die "Hüllendetektion" genannten Detektionsmittel der Kommunikationsvorrichtung, der durch die berührungsempfindliche Oberfläche im Betrieb gesendeten Signale;
Schritt 3: Vorbereiten des "Dongle-"Betriebsmodus der berührungsempfindlichen Oberfläche, wobei die Sendemittel in den Sendemodus der "Dongle-"Frequenzen gehen und die Empfangsmittel der berührungsempfindlichen Oberfläche in den Empfangsmodus der "Dongle-"Frequenzen gehen;
Schritt 4: Betrieb im "Dongle-"Modus, wobei die berührungsempfindliche Oberfläche und der Dongle Signale in den Dongle-Frequenzen austauschen.

5. Kommunikationsverfahren nach Anspruch 4, **dadurch gekennzeichnet, dass** der Schritt 4 im "Half duplex-"Modus ausgeführt wird, wobei die Kommunikationsvorrichtung und die berührungsempfindliche Oberfläche abwechselnd bei den gleichen spezifischen "Dongle-"Frequenzen senden und empfangen.

6. Kommunikationsverfahren nach Anspruch 4, **dadurch gekennzeichnet, dass** der Schritt 4 im "Full duplex-"Modus ausgeführt wird, wobei die Kommunikationsvorrichtung und die berührungsempfindliche Oberfläche gleichzeitig bei unterschiedlichen spezifischen "Dongle-"Frequenzen senden und empfangen.

7. Kommunikationsverfahren nach einem der Ansprüche 4 bis 6, **dadurch gekennzeichnet, dass**, während des Schrittes 4, die Sende- und Empfangsmittel der berührungsempfindlichen Oberfläche nur diejenigen leitfähigen Zeilen und Spalten abtasten, welche unterhalb des ringförmigen, flachen, leitfähigen Metallteils der Kommunikationsvorrichtung angeordnet sind.

## Claims

1. Communication device called capacitive dongle (200) intended to be used with a visualisation device having a capacitive touch-sensitive surface (100) comprising a matrix (110) of conductive rows and columns, the communication device being arranged on said capacitive touch-sensitive surface in operational use, the communication device operating in send mode and in receive mode, said communication device having at least:
- means (230, 240, 250) for sending periodic analogue signals, said signals being sent at at least one specific frequency called dongle frequency;
- a ring-shaped flat conductive metal part (210) connected to said sending means, said part intended to be placed on said capacitive touch-sensitive surface;
- means (260, 270) for receiving the received signals originating from said conductive metal part;
- means (280, 290) for analysing said digitised received signals;
- means for storing the sent signals and the analysed signals;
- a digital communication interface (295);
**characterised in that** the communication device (200) has a suction cup device (201, 202) making it possible to hold the communication device in place on the capacitive touch-sensitive surface.

2. Communication device called capacitive dongle according to claim 1, **characterised in that** the receiving means include:
- means (280), called "envelope detection", for detecting signals sent by the touch-sensitive surface within a range of determined amplitudes and frequencies so as to detect the presence of said capacitive touch-sensitive surface, said means operating in passive mode, i.e. without transmission of signals by the sending means;
- synchronous demodulating means (270) operating at the dongle frequency or frequencies so as to communicate in reception with said touch-sensitive surface.

3. Visualisation device comprising a communication device according to one of claims 1 to 2 and a visualising device having a capacitive touch-sensitive surface (100) capable of exchanging data with said communication device, said touch-sensitive surface comprising a matrix (110) of conductive rows (111) and columns (112), **characterised in that** the capacitive touch-sensitive surface includes:
- means for recognising a determined profile corresponding to the variations in capacitance induced on the rows and columns of the matrix by the ring-shaped flat conductive metal part, when the communication device is placed on said touch-sensitive surface;
- means for sending and receiving at the specific dongle frequency.

4. Method of communication of a system according to claim 3 between said communication device and said visualisation device, **characterised in that**, when the communication device is placed on the capacitive touch-sensitive surface, said method has the following steps:
Step 1: Recognition, by the recognising means of the touch-sensitive surface, of the determined profile of the ring-shaped flat conductive metal part of the dongle;
Step 2: Recognition by the detecting means called "envelope detection" of the communication device, of the signals sent by the touch-sensitive surface in operation;
Step 3: Preparation of the dongle operating mode of the touch-sensitive surface, the sending means switch to the mode for sending the dongle frequencies and the receiving means of the touch-sensitive surface switch to the mode for receiving the dongle frequencies;
Step 4: Operation in dongle mode, the touch-sensitive surface and the dongle exchange signals at the dongle frequencies.

5. Method of communication according to claim 4, **characterised in that** step 4 is performed in half duplex mode, the communication device and the touch-sensitive surface alternately sending and receiving on the same specific dongle frequencies.

6. Method of communication according to claim 4, **characterised in that** step 4 is performed in full duplex mode, the communication device and the touch-sensitive surface simultaneously sending and receiving on different specific dongle frequencies.

7. Method of communication according to one of claims 4 to 6, **characterised in that**, during step 4, the sending and receiving means of the touch-sensitive surface scan only the conductive rows and columns of the matrix arranged under the ring-shaped flat conductive metal part of the communication device.
